(19) Europäisches Patentamt
European Patent Office
Office européen des brevets

(11) **EP 4 276 934 A1**

(12) **EUROPEAN PATENT APPLICATION**
published in accordance with Art. 153(4) EPC

(43) Date of publication:
**15.11.2023 Bulletin 2023/46**

(21) Application number: **22922812.7**

(22) Date of filing: **28.01.2022**

(51) International Patent Classification (IPC):
***H01M 4/13*** *(2010.01)*

(52) Cooperative Patent Classification (CPC):
**H01M 4/13; Y02E 60/10**

(86) International application number:
**PCT/CN2022/074723**

(87) International publication number:
**WO 2023/141972 (03.08.2023 Gazette 2023/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde, Fujian 352100 (CN)**

(72) Inventors:
• **SUN, Xin**
**Ningde, Fujian 352100 (CN)**

• **XIE, Haotian**
**Ningde, Fujian 352100 (CN)**
• **CHEN, Xiao**
**Ningde, Fujian 352100 (CN)**
• **WANG, Donghao**
**Ningde, Fujian 352100 (CN)**
• **JING, Erdong**
**Ningde, Fujian 352100 (CN)**

(74) Representative: **Gong, Jinping**
**CocreateIP**
**Eggenfeldenerstraße 56**
**81929 München (DE)**

(54) **POSITIVE ELECTRODE PLATE AND LITHIUM ION BATTERY CONTAINING ELECTRODE PLATE**

(57)    This application provides a positive electrode plate for lithium-ion battery and a lithium-ion battery containing the same. The positive electrode plate includes a current collector, and a capacity layer and a power layer that are specially designed, able to effectively eliminate, in an economical and simple manner, the adverse impact on the battery performance caused by a product resulting from a pre-lithiation material releasing lithium during charge-discharge cycles, thereby significantly improving the first-cycle coulombic efficiency, cycling performance, and service life of batteries.

EP 4 276 934 A1

**Description**

**TECHNICAL FIELD**

This application relates to the field of batteries, and more specifically, to a positive electrode plate for lithium-ion battery, and further relates to a battery, a battery module, a battery pack, and an electric apparatus containing the same.

**BACKGROUND**

With the development of the related fields in recent years, rechargeable batteries (also known as secondary batteries) are increasingly used in fields such as consumer goods, new energy vehicles, large-scale energy storage, aerospace, ships and heavy machinery, even serving as the main power and energy supply equipment in these fields. In various available secondary batteries, lithium-ion secondary batteries have received widespread attention due to their excellent performance. However, lithium-ion secondary batteries also have some technical problems that have not been resolved so far. For example, how pre-lithiation technology for lithium-ion battery is improved is one of the great concerns. Generally, the existing pre-lithiation technology for lithium-ion battery is simply applying an additional pre-lithiation layer containing pre-lithiation agents is to the positive electrode active material layer. However, these pre-lithiation agents have strong alkalinity and large particle size, while the pre-lithiation layer is usually required to be thin. In this case, it is difficult to form a uniform pre-lithiation layer, and the non-uniformity of the pre-lithiation layer significantly increases the risk of lithium precipitation and local swelling force of the battery cell during charging and discharging, leading to undesirable service life and power of the battery and significantly increased probability of battery failure. In addition, during battery charging and discharging, electronic isolation oxide is formed after the pre-lithiation agent releases lithium, affecting conductivity of the positive electrode plate and causing performance of the lithium-ion battery to drop. In addition, it is well known in the art that the use of a positive electrode active material having a small particle size and a large BET specific surface area often leads to higher content of entrained impurities and more side reactions, significantly shortening the effective service life of lithium-ion batteries. However, the use of a positive electrode active material having a large particle size and a small BET specific surface area leads to reduced power of batteries. So far, such contradiction has not been well resolved.

Therefore, an improved technical solution is urgently needed in the art to effectively overcome the above problems in an economical and simple manner, achieve excellent pre-lithiation effect, significantly reduce or even eliminate the impact on the performance of batteries caused by a product resulting from the pre-lithiation agents releasing lithium, significantly reduce the risk of crystallization or swelling of batteries, and improve the power efficiency and cycling performance of batteries.

**SUMMARY**

Through a lot of in-depth researches, the inventors of this application have unexpectedly designed a unique technical solution to resolve the foregoing technical problems that urgently need to be resolved in the prior art by specially designing a specific composition of multiple layers in positive electrode plates.

A first aspect of this application provides a positive electrode plate for lithium-ion battery, where the positive electrode plate includes: i) a current collector; ii) at least one capacity layer, where the capacity layer includes a first binder, a first conductive agent, and a first positive electrode active material, the first positive electrode active material having a first median particle size; and ii) at least one power layer, where the power layer includes a second binder, a second conductive agent, a pre-lithiation agent, and a second positive electrode active material, the second positive electrode active material having a second median particle size; where the first median particle size is greater than the second median particle size. In this application, the capacity layer containing the first positive electrode active material and the power layer containing both the pre-lithiation agent and the second positive electrode active material are used, and the median particle sizes of the positive electrode active materials in the two layers are controlled, guaranteeing uniformity of the power layer in a simple and economical manner, and effectively inhibiting the adverse impact on the performance of the battery caused by an electronic isolation oxide generated after the pre-lithiation agent releases lithium. In this way, the risk of crystallization or swelling of batteries is significantly reduced, and power efficiency and cycling performance of batteries are improved.

According to an embodiment of the first aspect of this application, the positive electrode plate includes at least one capacity layer located on at least one surface of the current collector, and at least one power layer located on a surface of the at least one capacity layer facing away from the current collector. To be specific, the capacity layer is on the bottom (inside), and the power layer is on the top (outside). According to another embodiment of the first aspect of this application, the positive electrode plate includes at least one power layer located on at least one surface of the current collector, and at least one capacity layer located on a surface of the at least one power layer facing away from the current collector. To be specific, the capacity layer is on the top (outside), and the power layer is on the bottom (inside). Any one of the foregoing design structures is selected according to the desired use and operating environment of the lithium-ion battery, allowing the lithium-ion battery to better meet the performance requirement.

According to an embodiment of the first aspect of this application, the first median particle size of the first positive electrode active material is 0.8-1.3 $\mu$m. According to another embodiment of the first aspect of this application, the second median particle size of the second positive electrode active material is 0.1-0.7 $\mu$m, and preferably 0.2-0.45 $\mu$m. The particle sizes of the positive electrode active materials in the capacity layer and power layer being specially designed can ensure the energy density of the positive electrode plate while reducing impact on the conductivity caused by a product resulting from a pre-lithiation agent releasing lithium.

According to another embodiment of the first aspect of this application, the first positive electrode active material and the second positive electrode active material are each independently selected from lithium cobaltate, lithium iron phosphate, lithium manganese iron phosphate, lithium vanadium phosphate, lithium vanadyl phosphate, lithium vanadate, lithium manganate, positive electrode active material shown in formula I, positive electrode active material shown in formula II, and a combination thereof:

$$LiNi_xCo_yA_zO_2 \qquad \text{formula I}$$

in formula I, A is selected from one or more of the following elements: manganese, aluminum, copper, zinc, tin, titanium, magnesium, and iron, $0.01 \le x \le 0.98$, $0.01 \le y \le 0.98$, $0.01 \le z \le 0.98$, and $x+y+z=1$;

$$LiFe_{1-m-n}Mn_mB_nPO_4 \qquad \text{formula II}$$

in formula II, $0 \le m \le 1$, $0 \le n \le 0.1$, and B is selected from at least one of transition metal elements other than Fe and Mn and non-transition metal elements. According to another embodiment of the first aspect of this application, the first positive electrode active material is lithium iron phosphate, and the second positive electrode active material is also lithium iron phosphate. All the foregoing positive electrode active materials can be used in the technical solution of this application, so that manufacturing of batteries is highly flexible and appropriate positive electrode active materials can be selected according to battery performance and cost requirements. In other words, the technical solution of this application has a wide application range.

According to another embodiment of the first aspect of this application, the pre-lithiation agent is selected from one or more of the following: $Li_2M1O_2$, $Li_2M2O_3$, $Li_2M3O_4$, $Li_3M4O_4$, $Li_5M5O_4$, $Li_5M6O_6$, $Li_6M7O_4$, and $Li_aC_bO_c$. According to another embodiment of the first aspect of this application, the pre-lithiation agent is $Li_2M1O_2$, where M1 is selected from one or more of the following: Cu, Ni, Mn, Fe, Cr, Mo, Zn, Sn, Mg, and Ca. According to another embodiment of the first aspect of this application, the pre-lithiation agent is $Li_2M2O_3$, where M2 is selected from one or more of the following: Ni, Co, Fe, Mn, Sn, Cr, Mo, Zr, Si, Cu, and Ru. According to another embodiment of the first aspect of this application, the pre-lithiation agent is $Li_2M3O_4$, where M3 is selected from one or more of the following: Ni, Co, Fe, Mn, Sn, Cr, V, and Nb. According to another embodiment of the first aspect of this application, the pre-lithiation agent is $Li_3M4O_4$, where M4 is selected from one or more of the following: Cu, Ni, Mn, Fe, Cr, Mo, Zn, Sn, Mg, and Ca. According to another embodiment of the first aspect of this application, the pre-lithiation agent is $Li_5M5O_4$, where M5 is selected from one or more of the following: Ni, Co, Fe, Mn, Sn, Cr, and Mo. According to another embodiment of the first aspect of this application, the pre-lithiation agent is $Li_5M6O_6$, where M6 is selected from one or more of the following: Cu, Ni, Mn, Fe, Cr, Mo, Zn, Sn, Mg, and Ca. According to another embodiment of the first aspect of this application, the pre-lithiation agent is $Li_6M7O_4$, where M7 is selected from one or more of the following: Ni, Co, Mn, Fe, and Ru. According to another embodiment of the first aspect of this application, the pre-lithiation agent is $Li_aC_bO_c$, where a is an integer 1 or 2, b is an integer 0, 1, 2, 3, or 4, and c is an integer 1, 2, 3, 4, 5, or 6. According to another embodiment of the first aspect of this application, the pre-lithiation agent includes $Li_2Cu_{0.5}Ni_{0.5}O_2$, $Li_5FeO_4$, and a combination thereof. All the foregoing pre-lithiation agents can be used in the technical solution of this application, so that manufacturing of batteries is highly flexible and appropriate pre-lithiation agent materials can be selected according to battery performance and cost requirements. In other words, the technical solution of this application has a wide application range.

According to another embodiment of the first aspect of this application, a median particle size of the pre-lithiation agent is 5-15 $\mu$m, for example, 6-10 $\mu$m. Adjustment of the median particle size of the pre-lithiation agent facilitates formation of a uniform and thin power layer, so as to improve the power and service life of batteries and further reduce the risk of lithium precipitation and swelling of battery cells.

According to another embodiment of the first aspect of this application, based on the total weight of the capacity layer, the capacity layer includes 1-30 wt% of the first binder, 0.1-10 wt% of the first conductive agent, and 60-98.5 wt% of the first positive electrode active material. According to another embodiment of the first aspect of this application, based on the total weight of the power layer, the power layer includes 1-30 wt% of the second binder, 0.1-10 wt% of the second conductive agent, 0.1-30 wt% of the pre-lithiation agent, and 50-97 wt% of the second positive electrode active material. According to another embodiment of the first aspect of this application, a percentage of the second conductive agent in the power layer is equal to or greater than a percentage of the first conductive agent in the capacity layer. According to another embodiment of the first aspect of this application, a weight ratio of the power layer and the capacity layer is 1:9 to 9:1. Selection of the foregoing preferred ratio further improves pre-lithiation effect. To be specific, lithium batteries have high first-cycle coulombic efficiency, optimized energy density, and excellent cycle life.

A second aspect of this application provides a lithium-ion battery, where the lithium-ion battery includes a negative electrode plate, an electrolyte, a separator, and the positive electrode plate for lithium-ion battery according to any one of the embodiments in the first aspect. A third aspect of this application provides a battery module containing the lithium-ion battery in the second aspect of this application. A fourth aspect of this application provides a battery pack containing the battery module in the third aspect of this application. The lithium-ion battery, the battery module, and the battery pack achieve excellent pre-lithiation effect due to the use of the positive electrode plate of this application. To be specific, the undesirable battery power caused by a product resulting from a pre-lithiation material releasing lithium is well addressed, the effective service life of the battery is significantly extended, and the battery is secured with stable and excellent efficiency, conductivity, power, and energy density in the effective service life of the battery.

A fifth aspect of this application provides an electric apparatus containing at least one of the lithium-ion battery, the battery module, or the battery pack in any one of the foregoing aspects. The electric apparatus achieves excellent pre-lithiation effect due to the use of the positive electrode plate of this application. To be specific, the undesirable battery power caused by a product resulting from a pre-lithiation material releasing lithium is well addressed, the effective service life of the battery is significantly extended, and the battery is secured with stable and excellent efficiency, conductivity, power, and energy density in the effective service life of the battery, thereby ensuring long-term stable operation of the electric apparatus.

**BRIEF DESCRIPTION OF DRAWINGS**

FIG. 1A is a cross-sectional view of a positive electrode plate according to an embodiment of this application, where a capacity layer and a power layer are disposed on a surface of a current collector, and the capacity layer is disposed under the power layer. FIG. 1B is a cross-sectional view of a positive electrode plate according to another embodiment of this application, where a capacity layer and a power layer are disposed on a surface of a current collector, and the capacity layer is disposed on (outside) the power layer.

FIG. 2A is a cross-sectional view of a positive electrode plate according to another embodiment of this application, where a capacity layer and a power layer are respectively disposed on two surfaces of a current collector, and the capacity layer is disposed under the power layer. FIG. 2B is a cross-sectional view of a positive electrode plate according to another embodiment of this application, where a capacity layer and a power layer are respectively disposed on two surfaces of a current collector, and the capacity layer is disposed on (outside) the power layer.

FIG. 3 is a schematic diagram of an embodiment of a lithium-ion battery of this application.

FIG. 4 is an exploded view of the lithium-ion battery in FIG. 3.

FIG. 5 is a schematic diagram of a battery module according to an embodiment of this application.

FIG. 6 is a schematic diagram of a battery pack according to an embodiment of this application.

FIG. 7 is an exploded view of the battery pack in FIG. 6.

FIG. 8 is a schematic diagram of an embodiment of an electric apparatus using the lithium-ion battery in this application as a power source.

The following specific embodiments describe design details of a positive electrode plate and a lithium-ion battery, battery module, battery pack, and electric apparatus containing the same designed in this application.

**DESCRIPTION OF EMBODIMENTS**

"Ranges" disclosed herein are defined in the form of lower and upper limits. Given ranges are defined by selecting lower and upper limits, and the selected lower and upper limits define boundaries of special ranges. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combination of real numbers from a to b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and the like.

In this application, unless otherwise specified, all the embodiments and preferred embodiments mentioned herein may be combined with each other to form new technical solutions.

In this application, unless otherwise specified, all the technical features and preferred features mentioned herein may be combined with each other to form new technical solutions.

In this application, unless otherwise specified, "contain" and "include" mentioned herein may refer to open or closed inclusion. For example, the terms "contain" and "include" can mean that other unlisted components may also be contained or included, or only listed components may be contained or included.

In the descriptions of this specification, it should be noted that "more than" and "less than" are inclusive of the present number and that "more" in "one or more" means two or more than two, unless otherwise specified.

In the descriptions of this specification, unless otherwise stated, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In this application, the terms "lithium-ion battery" and "lithium-ion secondary battery" are used interchangeably and used to represent lithium-ion batteries that can be repeatedly charged and discharged. In the full text of this application, the terms "negative electrode" and "anode" are used interchangeably, meaning a same electrode in the battery. The terms "positive electrode" and "cathode" are used interchangeably, meaning a same electrode in the battery.

According to an embodiment of this application, a positive electrode plate for lithium-ion battery is developed. The positive electrode plate includes a current collector, at least one capacity layer, and at least one power layer.

According to an embodiment of this application, the current collector is a metal foil, a metal alloy foil, a polymer sheet with a metal coating, or a polymer sheet with a metal alloy coating, where metal in the metal foil and the metal coating is selected from copper, silver, iron, titanium, nickel, and aluminum; metal in the metal alloy foil and the metal alloy coating is selected from copper alloy, nickel alloy, titanium alloy, silver alloy, iron alloy, and aluminum alloy; and the polymer sheet is selected from polypropylene, polyethylene glycol terephthalate, polybutylene terephthalate, polystyrene, and mixtures or copolymers thereof.

In the full text of this application, the "capacity layer" mainly contains a "high gram capacity/high energy" positive active material and serves as a layer to provide a high energy density for batteries. According to an embodiment of this application, the capacity layer includes a first binder, a first conductive agent, and a first positive electrode active material, the first positive electrode active material having a first median particle size. Preferably, based on the total weight of the capacity layer, the capacity layer includes 1-30 wt% of the binder, 0.1-10 wt% of the conductive agent, and 60-95 wt% of the first positive electrode active material. According to an embodiment of this application, the capacity layer does not contain a pre-lithiation agent intentionally added, especially the pre-lithiation agent mentioned in the following description of composition of the power layer.

In this application, compositions of the capacity layer and the power layer, for example, a binder, a conductive agent, and a positive electrode active material, are each defined by prefixes "first" and "second" when being described. This is only to distinguish the compositions in the two layers in expression, but not to limit that the corresponding compositions in the two layers are necessarily different. The protection scope of this application covers embodiments in which same or different types of binders, conductive agents, and/or positive electrode active materials are used in the capacity layer and the power layer, respectively.

According to an embodiment of this application, the first positive electrode active material for the capacity layer is selected from one or more of the following: lithium cobaltate, lithium iron phosphate, lithium manganese iron phosphate, lithium vanadium phosphate, lithium vanadyl phosphate, lithium vanadate, lithium manganate, positive electrode active material shown in formula I, positive electrode active material shown in formula II, and a combination thereof:

$$LiNi_xCo_yA_zO_2 \qquad \text{formula I}$$

where A is selected from one or more of the following elements: manganese, aluminum, copper, zinc, tin, titanium, magnesium, and iron, $0.01 \leq x \leq 0.98$, $0.01 \leq y \leq 0.98$, $0.01 \leq z \leq 0.98$, and $x+y+z=1$. For the positive electrode active material shown in formula I, a value of x may be within the range obtained by using any two of the following values as upper and lower limits respectively: 0.01, 0.015, 0.02, 0.025, 0.03, 0.035, 0.04, 0.05, 0.06, 0.07, 0.075, 0.08, 0.085, 0.09, 0.1, 0.15, 0.2, 0.25, 0.3, 1/3, 0.35, 0.4, 0.45, 0.5, 0 55, 0.6, 0.65, 2/3, 0.7, 0.75, 0.8, 0.85, 0.9, 0.95, and 0.99; a value of y may be within the range obtained by using any two of the following values as upper and lower limits respectively: 0.01, 0.015, 0.02, 0.025, 0.03, 0.035, 0.04, 0.05, 0.06, 0.07, 0.075, 0.08, 0.085, 0.09, 0.1, 0.15, 0.2, 0.25, 0.3, 1/3, 0.35, 0.4, 0.45, 0.5, 0 55, 0.6, 0.65, 2/3, 0.7, 0.75, 0.8, 0.85, 0.9, 0.95, and 0.99; and a value of z may be within the range obtained by using any two of the following values as upper and lower limits respectively: 0.01, 0.015, 0.02, 0.025, 0.03, 0.035, 0.04, 0.05, 0.06, 0.07, 0.075, 0.08, 0.085, 0.09, 0.1, 0.15, 0.2, 0.25, 0.3, 1/3, 0.35, 0.4, 0.45, 0.5, 0.55, 0.6, 0.65, 2/3, 0.7, 0.75, 0.8, 0.85, 0.9, 0.95, and 0.99, where the values of x, y, and z satisfy x + y + z = 1.

$$LiFe_{1-m-n}Mn_mB_nPO_4 \qquad \text{formula II}$$

in formula II, $0 \leq m \leq 1$, $0 \leq n \leq 0.1$, and B is selected from at least one of transition metal elements other than Fe and Mn and non-transition metal elements. For example, for the positive electrode active material shown in formula II, a value of m may be within the range obtained by using any two of the following values as upper and lower limits respectively: 0.01, 0.015, 0.02, 0.025, 0.03, 0.035, 0.04, 0.05, 0.06, 0.07, 0.075, 0.08, 0.085, 0.09, 0.1, 0.15, 0.2, 0.25, 0.3, 1/3, 0.35, 0.4, 0.45, 0.5, 0 55, 0.6, 0.65, 2/3, 0.7, 0.75, 0.8, 0.85, 0.9, 0.95, and 0.99; a value of n may be within the range obtained by using any two of the following values as upper and lower limits respectively: 0.01, 0.015, 0.02, 0.025, 0.03, 0.035, 0.04, 0.05, 0.06, 0.07, 0.075, 0.08, 0.085, 0.09, and 0.1; and B may be selected from the following metal elements: Cu, Ni, Cr, Mo, Zn, Sn, Mg, Ca, Co, Zr, Si, Ru, V, Nb, and a combination thereof.

According to another independent embodiment of this application, the capacity layer includes only lithium iron phosphate ($LiFePO_4$) as the first positive electrode active material, that is, the capacity layer does not include the first positive electrode active material other than lithium iron phosphate.

Based on the total weight of the capacity layer, a percentage of the first positive electrode active material may be 60-98.5 wt%, for example, 70-98 wt% or 80-97 wt%. For example, a percentage of the first binder may be within the range obtained by using any two of the following values as upper and lower limits respectively: 60 wt%, 61 wt%, 62 wt%, 63 wt%, 64 wt%, 65 wt%, 66 wt%, 67 wt%, 68 wt%, 69 wt%, 70 wt%, 71 wt%, 72 wt%, 73 wt%, 74 wt%, 75 wt%, 76 wt%, 77 wt%, 78 wt%, 79 wt%, 80 wt%, 81 wt%, 82 wt%, 83 wt%, 84 wt%, 85 wt%, 86 wt%, 87 wt%, 88 wt%, 89 wt%, 90 wt%, 91 wt%, 92 wt%, 93 wt%, 94 wt%, 95 wt%, 96 wt%, 97 wt%, 98 wt%, and 98.5 wt%.

In this application, a median particle size by volume is used to describe a particle size, and the median particle size by volume is measured using a laser scattering particle size analyzer. The particle size can be represented by D10, D50, D90, and D99. "D50=specific value" means that in the total volume set of particles under test, 50% (by volume) particles have a particle size greater than the specific value and the remaining 50% (by volume) particles have a particle size smaller than this particle size. "D10=specific value" means that in the total volume set of particles under test, 10% (by volume) particles have a particle size less than the specific value and the remaining particles have a particle size greater than the specific value. "D90=specific value" means that in the total volume set of particles under test, 90% (by volume) particles have a particle size less than the specific value and the remaining particles have a particle size greater than the specific value. "D99=specific value" means that in the total volume set of particles under test, 99% (by volume) particles have a particle size less than the specific value and the remaining particles have a particle size greater than the specific value. In this application, a median particle size by volume D50 of is used to describe a median particle size of particles. In other words, unless otherwise specified, the terms "median particle size", "median particle size by volume", and "volume-based median particle size" all indicate D50 of particles.

According to an embodiment of this application, D10 of the first positive electrode active material is greater than 0.3 $\mu$m and less than or equal to 0.6 $\mu$m. For example, D10 may be within the range obtained by using any two of the following values as upper and lower limits respectively: 0.31 $\mu$m, 0.4 $\mu$m, 0.5 $\mu$m, and 0.6 $\mu$m. According to an embodiment of this application, D90 of the first positive electrode active material is greater than 1.2 $\mu$m and less than or equal to 4 $\mu$m. For example, D90 may be within the range obtained by using any two of the following values as upper and lower limits respectively: 1.21 $\mu$m, 1.3 $\mu$m, 1.4 $\mu$m, 1.5 $\mu$m, 1.6 $\mu$m, 1.7 $\mu$m, 1.8 $\mu$m, 1.9 $\mu$m, 2.0 $\mu$m, 2.1 $\mu$m, 2.2 $\mu$m, 2.3 $\mu$m, 2.4 $\mu$m, 2.5 $\mu$m, 2.6 $\mu$m, 2.7 $\mu$m, 2.8 $\mu$m, 2.9 $\mu$m, 3.0 $\mu$m, 3.1 $\mu$m, 3.2 $\mu$m, 3.3 $\mu$m, 3.4 $\mu$m, 3.5 $\mu$m, 3.6 $\mu$m, 3.7 $\mu$m, 3.8 $\mu$m, and 4.0 $\mu$m. According to an embodiment of this application, D99 of the first positive electrode active material is greater than 3.0 $\mu$m, for example, may be 3.1-8.0 $\mu$m. For example, D99 may be within the range obtained by using any two of the following values as upper and lower limits respectively: 3.1 $\mu$m, 3.2 $\mu$m, 3.3 $\mu$m, 3.4 $\mu$m, 3.5 $\mu$m, 3.6 $\mu$m, 3.7 $\mu$m, 3.8 $\mu$m, 4.0 $\mu$m, 4.1 $\mu$m, 4.2 $\mu$m, 4.3 $\mu$m, 4.4 $\mu$m, 4.5 $\mu$m, 4.6 $\mu$m, 4.7 $\mu$m, 4.8 $\mu$m, 4.9 $\mu$m, 5.0 $\mu$m, 5.1 $\mu$m, 5.2 $\mu$m, 5.3 $\mu$m, 5.4 $\mu$m, 5.5 $\mu$m, 5.6 $\mu$m, 5.7 $\mu$m, 5.8 $\mu$m, 5.9 $\mu$m, 6.0 $\mu$m, 6.1 $\mu$m, 6.2 $\mu$m, 6.3 $\mu$m, 6.4 $\mu$m, 6.5 $\mu$m, 6.6 $\mu$m, 6.7 $\mu$m, 6.8 $\mu$m, 6.9 $\mu$m, 7.0 $\mu$m, 7.1 $\mu$m, 7.2 $\mu$m, 7.3 $\mu$m, 7.4 $\mu$m, 7.5 $\mu$m, 7.6 $\mu$m, 7.7 $\mu$m, 7.8 $\mu$m, 7.9 $\mu$m, and 8.0 $\mu$m.

According to another independent embodiment of this application, a median particle size by volume (also called volume-based median particle size) D50 of the first positive electrode active material is 0.8-1.3 $\mu$m. For example, the median particle size by volume D50 may be within the range obtained by using any two of the following values as upper and lower limits respectively: 0.8 $\mu$m, 0.9 $\mu$m, 1.0 $\mu$m, 1.1 $\mu$m, 1.2 $\mu$m, and 1.3 $\mu$m. Preferably, D50 of the first positive electrode active material for the capacity layer is greater than D50 of a second positive electrode active material for the power layer. More preferably, the following relationships are satisfied at the same time: D50 of the first positive electrode active material for the capacity layer is greater than D50 of the second positive electrode active material for the power layer, D10 of the first positive electrode active material is greater than D10 of the second positive electrode active material, D90 of the first positive electrode active material is greater than D90 of the second positive electrode active material, and D99 of the first positive electrode active material is greater than D99 of the second positive electrode active material.

According to an embodiment of this application, the first binder for the capacity layer may include one or more of the following: polyvinylidene fluoride, polyvinyl alcohol, polyacrylic acid, polymethylacrylic acid, carboxymethyl cellulose (CMC), sodium carboxymethyl cellulose, amylum, hydroxypropyl cellulose, regenerated cellulose, polyvinylpyrrolidone, polytetrafluoroethylene, polyethylene, polypropylene, propylene-ethylene-ethylidene norbornene terpolymer, sulfonate-propylene-ethylene-ethylidene norbornene terpolymer, polystyrene-butadiene rubber (styrene-butadiene rubber, also referred to as SBR), fluorine-containing rubber, polytrifluorochloroethylene, water soluble unsaturated resin SR-1B, sodium alga acid, polyurethane, sodium polyacrylate, sodium polymethacrylate, acrylamide, carboxymethyl chitosan, and mixture or copolymers thereof. Based on the total weight of the capacity layer, a percentage of the first binder may be 1-30 wt%, for example, 1-10 wt% or 2-5 wt%. For example, the percentage of the first binder may be within the range obtained by using any two of the following values as upper and lower limits respectively: 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, and 30 wt%.

According to an embodiment of this application, the first conductive agent for the capacity layer may include one or more of the following: superconducting carbon, acetylene black, carbon black, Ketjen black, carbon dots, carbon nanotubes, graphene graphite, meso-carbon microbeads, soft carbon, hard carbon, carbon fiber, graphene, Super P, furnace black, vapor grown carbon fiber (VGCF), and carbon nanofiber. Based on the total weight of the capacity layer, a percentage of the first conductive agent may be 0.1-10 wt%, for example, 0.5-5 wt% or 1-2 wt%. For example, the percentage of the first conductive agent may be within the range obtained by using any two of the following values as upper and lower limits respectively: 0.1 wt%, 0.2 wt%, 0.3 wt%, 0.4 wt%, 0.5 wt%, 0.6 wt%, 0.7 wt%, 0.8 wt%, 0.9 wt%, 1 wt%, 1.2 wt%, 1.5 wt%, 1.8 wt%, 2 wt%, 3 wt%, 4 wt%, 5 wt%, 6 wt%, 7 wt%, 8 wt%, 9 wt%, and 10 wt%. According to a most preferred embodiment, the first conductive agent contained in the capacity layer is a carbon-based conductive agent, for example, one or more of the foregoing carbon-based conductive agents. Based on the total weight of the capacity layer, the percentage of the first conductive agent is ≤1.3 wt%, for example, 1.2 wt%. Preferably, the percentage of the first conductive agent in the capacity layer is less than the percentage of the second conductive agent in the power layer.

According to another independent embodiment of this application, a compacted density of the capacity layer is higher than a compacted density of the power layer, and a BET specific surface area of the capacity layer is less than a BET specific surface area of the power layer. According to an embodiment of this application, the capacity layer may have a compacted density of ≥2.4 g/cm$^3$, for example, 2.4-3.0 g/cm$^3$. For example, the compacted density may be within the range obtained by using any two of the following values as upper and lower limits respectively: 2.4 g/cm$^3$, 2.5 g/cm$^3$, 2.6 g/cm$^3$, 2.7 g/cm$^3$, 2.8 g/cm$^3$, 2.9 g/cm$^3$, and 3 g/cm$^3$. According to another embodiment of this application, the BET specific surface area of the capacity layer is ≤13 m$^2$/g or is 5-13 m$^2$/g. For example, the BET specific surface area may be within the range obtained by using any two of the following values as upper and lower limits respectively: 5 m$^2$/g, 6 m$^2$/g, 7 m$^2$/g, 8 m$^2$/g, 9 m$^2$/g, 10 m$^2$/g, 11 m$^2$/g, 12 m$^2$/g, and 13 m$^2$/g.

In the full text of this application, the "power layer" mainly contains a "high-power" positive active material and serves a layer to provide a high power for batteries. The power layer according to this application contains both the second positive electrode active material and the pre-lithiation agent, and the particle size of the second positive electrode active material is specially designed so as to provide an excellent electronic conductive network for the pre-lithiation agent, thereby effectively inhibiting or significantly eliminating the impact on the overall conductivity of the positive electrode plate caused by of a product resulting from the pre-lithiation agent releasing lithium. According to an embodiment of this application, the power layer includes a second binder, a second conductive agent, a pre-lithiation agent, and a second positive electrode active material, the second positive electrode active material having a second median particle size. As described above, a second average diameter of the second positive electrode active material is significantly less than a first average diameter of the first positive electrode active material.

According to an embodiment of this application, the second binder for the power layer may include one or more of the first binders listed above that can be used for the capacity layer. Preferably, for the purpose of simplifying a manufacturing process, a same type of binder is used in the power layer and the capacity layer. Based on the total weight of the power layer, a percentage of the second binder may be 1-30 wt%, for example, 1-10 wt% or 2-5 wt%. For example, the percentage of the second binder may be within the range obtained by using any two of the following values as upper and lower limits respectively: 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, and 30 wt%.

According to an embodiment of this application, the second conductive agent for the power layer may include one or more of the first conductive agents listed above that can be used for the capacity layer. Preferably, for the purpose of simplifying a manufacturing process, a same type of conductive agent is used in the power layer and the capacity layer. Based on the total weight of the power layer, a percentage of the second conductive agent may be 0.1-10 wt%, for example, 0.5-5 wt% or 1-2 wt%. For example, the percentage of the second conductive agent may be within the range obtained by using any two of the following values as upper and lower limits respectively: 0.1 wt%, 0.2 wt%, 0.3 wt%, 0.4 wt%, 0.5 wt%, 0.6 wt%, 0.7 wt%, 0.8 wt%, 0.9 wt%, 1 wt%, 1.2 wt%, 1.5 wt%, 1.8 wt%, 2 wt%, 3 wt%, 4 wt%, 5 wt%, 6 wt%, 7 wt%, 8 wt%, 9 wt%, and 10 wt%. According to a most preferred embodiment, the second conductive agent contained in the power layer is a carbon-based conductive agent, for example, one or more of the foregoing carbon-based conductive agents. Preferably, based on the total weight of the power layer, the percentage of the second conductive agent is $\geq$1.4 wt%, for example, 1.45 wt%.

According to an embodiment of this application, the second positive electrode active material for the power layer may include one or more of the first positive electrode active materials listed above that can be used for the capacity layer. Preferably, for the purpose of simplifying a manufacturing process, a same type of positive electrode active material is used in the power layer and the capacity layer. More preferably, lithium iron phosphate is used in both the power layer and the capacity layer as the positive electrode active material.

According to an embodiment of this application, based on the total weight of the power layer, a percentage of the second positive electrode active material may be 50-97 wt%, for example, 70-94 wt% or 80-90 wt%. For example, a percentage of the second binder may be within the range obtained by using any two of the following values as upper and lower limits respectively: 60 wt%, 61 wt%, 62 wt%, 63 wt%, 64 wt%, 65 wt%, 66 wt%, 67 wt%, 68 wt%, 69 wt%, 70 wt%, 71 wt%, 72 wt%, 73 wt%, 74 wt%, 75 wt%, 76 wt%, 77 wt%, 78 wt%, 79 wt%, 80 wt%, 81 wt%, 82 wt%, 83 wt%, 84 wt%, 85 wt%, 86 wt%, 87 wt%, 88 wt%, 89 wt%, 90 wt%, 91 wt%, 92 wt%, 93 wt%, 94 wt%, 95 wt%, 96 wt%, and 97 wt%.

According to an embodiment of this application, D10 of the second positive electrode active material is $\leq$0.3 $\mu$m, for example <0.3 $\mu$m, or 0.1-0.25 $\mu$m. For example, D10 may be within the range obtained by using any two of the following values as upper and lower limits respectively: 0.1 $\mu$m, 0.15 $\mu$m, 0.20 $\mu$m, 0.25 $\mu$m, 0.28 $\mu$m, 0.29 $\mu$m, and 0.30 $\mu$m; and D10 of the second positive electrode active material is less than D10 of the first positive electrode active material. According to an embodiment of this application, D90 of the second positive electrode active material is $\leq$1.2 $\mu$m, for example <1.2 $\mu$m, or 0.5-1.1 $\mu$m. For example, D90 may be within the range obtained by using any two of the following values as upper and lower limits respectively: 0.5 $\mu$m, 0.6 $\mu$m, 0.7 $\mu$m, 0.8 $\mu$m, 0.9 $\mu$m, 1.0 $\mu$m, 1.1 $\mu$m, 1.15 $\mu$m, and 1.20 $\mu$m; and D90 of the second positive electrode active material is less than D90 of the first positive electrode active material. According to an embodiment of this application, D99 of the second positive electrode active material is $\leq$3.0 $\mu$m, for example, may be 1.0-3.0 $\mu$m. For example, D99 may be within the range obtained by using any two of the following values as upper and lower limits respectively: 1.1 $\mu$m, 1.2 $\mu$m, 1.3 $\mu$m, 1.4 $\mu$m, 1.5 $\mu$m, 1.6 $\mu$m, 1.7 $\mu$m, 1.8 $\mu$m, 1.9 $\mu$m, 2.0 $\mu$m, 2.1 $\mu$m, 2.2 $\mu$m, 2.3 $\mu$m, 2.4 $\mu$m, 2.5 $\mu$m, 2.6 $\mu$m, 2.7 $\mu$m, 2.8 $\mu$m, 2.9 $\mu$m, and 3.0 $\mu$m; and D99 of the second positive electrode active material is less than D99 of the first positive electrode active material. According to another independent embodiment of this application, a median particle size by volume (also called volume-based median particle size) D50 of the second positive electrode active material is $\leq$0.45 $\mu$m, or is 0.2-0.45 $\mu$m. For example, D50 may be within the range obtained by using any two of the following values as upper and lower limits respectively: 0.20 $\mu$m, 0.21 $\mu$m, 0.22 $\mu$m, 0.23 $\mu$m, 0.24 $\mu$m, 0.25 $\mu$m, 0.26 $\mu$m, 0.27 $\mu$m, 0.28 $\mu$m, 0.29 $\mu$m, 0.30 $\mu$m, 0.31 $\mu$m, 0.32 $\mu$m, 0.33 $\mu$m, 0.34 $\mu$m, 0.35 $\mu$m, 0.36 $\mu$m, 0.37 $\mu$m, 0.38 $\mu$m, 0.39 $\mu$m, 0.40 $\mu$m, 0.41 $\mu$m, 0.42 $\mu$m, 0.43 $\mu$m, 0.44 $\mu$m, and 0.45 $\mu$m; and D50 of the second positive electrode active material is less than D50 of the first positive electrode active material.

According to an embodiment of this application, the pre-lithiation agent for the capacity layer is selected from one or more of the following: $Li_2M1O_2$, where M1 is selected from one or more of the following: Cu, Ni, Mn, Fe, Cr, Mo, Zn, Sn, Mg, and Ca; $Li_2M2O_3$, where M2 is selected from one or more of the following: Ni, Co, Fe, Mn, Sn, Cr, Mo, Zr, Si, Cu, and Ru; $Li_2M3O_4$, where M3 is selected from one or more of the following: Ni, Co, Fe, Mn, Sn, Cr, V, and Nb; $Li_3M4O_4$, where M4 is selected from one or more of the following: Cu, Ni, Mn, Fe, Cr, Mo, Zn, Sn, Mg, and Ca; $Li_5M5O_4$, where M5 is selected from one or more of the following: Ni, Co, Fe, Mn, Sn, Cr, Mo, and Al; $Li_5M6O_6$, where M6 is selected from one or more of the following: Cu, Ni, Mn, Fe, Cr, Mo, Zn, Sn, Mg, and Ca; $Li_6M7O_4$, where M5 is selected from one or more of the following: Ni, Co, Mn, Fe, and Ru; and $Li_aCbO_c$, where a is an integer 1 or 2, b is an integer 0, 1, 2, 3, or 4, and c is an integer 1, 2, 3, 4, 5, or 6.

According to an embodiment of this application, the pre-lithiation agent is selected from one or more of the following: $Li_2NiO_2$, $Li_2Cu_{0.5}Ni_{0.5}O_2$, $Li_2MoO_3$, $Li_5FeO_4$, $Li_5Fe_{0.9}Al_{0.1}O_4$, $Li_6MnO_4$, $Li_6Mn_{0.5}Ru_{0.5}O_4$, $Li_2O$, $Li_2O_2$, $Li_2C_2O_4$, $Li_2C_4O_4$, $LiC_2O_2$, $Li_2C_3O_5$, and $Li_2C_4O_6$. According to a preferred embodiment of this application, the pre-lithiation agent includes $Li_2Cu_{0.5}Ni_{0.5}O_2$, $Li_5FeO_4$, and a combination thereof.

According to an embodiment of this application, a median particle size by volume D50 of the pre-lithiation agent is 5-15 $\mu$m, and preferably 6-10 $\mu$m. For example, D50 may be within the range obtained by using any two of the following values as upper and lower limits respectively: 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, and 15 $\mu$m. According to an embodiment of this application, based on the total weight of the power layer, a percentage of the pre-lithiation agent may be 0.1-30 wt%, for example, 0.5-20 wt% or 1-10 wt%. For example, the percentage of the pre-lithiation agent can be within the range obtained by using any two of the following values as upper and lower limits respectively: 0.1 wt%, 0.2 wt%, 0.5 wt%, 0.8 wt%, 1.0 wt%, 1.2 wt%, 1.5 wt%, 1.8 wt%, 2.0 wt%, 2.2 wt%, 2.5 wt%, 2.8 wt%, 3.0 wt%, 3.2 wt%, 3.5 wt%, 3.8 wt%, 4.0 wt%, 4.2 wt%, 4.5 wt%, 4.8 wt%, 5.0 wt%, 5.2 wt%, 5.5 wt%, 5.8 wt%, 6.0 wt%, 6.2 wt%, 6.5 wt%, 6.8 wt%, 7.0 wt%, 7.2 wt%, 7.5 wt%, 7.8 wt%, 8.0 wt%, 8.2 wt%, 8.5 wt%, 8.8 wt%, 9.0 wt%, 9.2 wt%, 9.5 wt%, 9.8 wt%, 10.0 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, and 30%.

According to another independent embodiment of this application, a compacted density of the power layer is less than a compacted density of the capacity layer, and a BET specific surface area of the power layer is greater than a BET specific surface area of the capacity layer. According to an embodiment of this application, the capacity layer may have a compacted density of $\leq 2.3$ g/cm$^3$, for example, 1.8-2.3 g/cm$^3$. For example, the compacted density may be within the range obtained by using any two of the following values as upper and lower limits respectively: 1.8 g/cm$^3$, 1.9 g/cm$^3$, 2.0 g/cm$^3$, 2.1 g/cm$^3$, 2.2 g/cm$^3$, and 2.3 g/cm$^3$. According to another embodiment of this application, the BET specific surface area of the capacity layer is $\geq 14$ m$^2$/g or is 14-25 m$^2$/g. For example, the BET specific surface area may be within the range obtained by using any two of the following values as upper and lower limits respectively: 14 m$^2$/g, 15 m$^2$/g, 16 m$^2$/g, 17 m$^2$/g, 18 m$^2$/g, 19 m$^2$/g, 20 m$^2$/g, 21 m$^2$/g, 22 m$^2$/g, 23 m$^2$/g, 24 m$^2$/g, and 25 m$^2$/g.

According to an embodiment of this application, a total coating weight of the power layer and the capacity layer (a sum of coating weights of the power layer and the capacity layer per unit area) may be 5-26 g/cm$^2$, for example, 5 g/cm$^2$, 6 g/cm$^2$, 7 g/cm$^2$, 8 g/cm$^2$, 9 g/cm$^2$, 10 g/cm$^2$, 11 g/cm$^2$, 12 g/cm$^2$, 13 g/cm$^2$, 14 g/cm$^2$, 15 g/cm$^2$, 16 g/cm$^2$, 17 g/cm$^2$, 18 g/cm$^2$, 19 g/cm$^2$, 20 g/cm$^2$, 21 g/cm$^2$, 22 g/cm$^2$, 23 g/cm$^2$, 24 g/cm$^2$, 25 g/cm$^2$, or 26 g/cm$^2$. According to another embodiment of this application, a solid weight ratio of the power layer and the high-capacity layer is 1:9 to 9:1, preferably 2:8 (namely, 1:4) to 1:1, and more preferably 2:8 (namely, 1:4) to 1:2. For example, the solid weight ratio of the power layer and the high-capacity layer may be within the range obtained by using any two of the following values as upper and lower limits respectively: 1:9, 1:8, 1:7, 1:6, 1:5, 1:4, 1:3, 1:2, 1:1, 2:1, 3:1, 4:1, 5:1, 6:1, 7:1, 8:1, and 9:1.

In the embodiments of this application, the capacity layer and the power layer on the current collector may be prepared by mixing respective components of each layer and other optional additives with a solvent or dispersant, for example, N-methylpyrrolidone (NMP) or deionized water, to form a slurry, and applying the slurry in sequence, followed by drying and cold pressing, to form a positive electrode plate including the current collector, the capacity layer, and the power layer. For example, other additives optionally contained in the capacity layer and the power layer are a thickener, a PTC thermistor material, and the like. The slurry can be applied using a conventional coating technique, for example, curtain coating, blade coating, tape casting coating, or gravure roll coating.

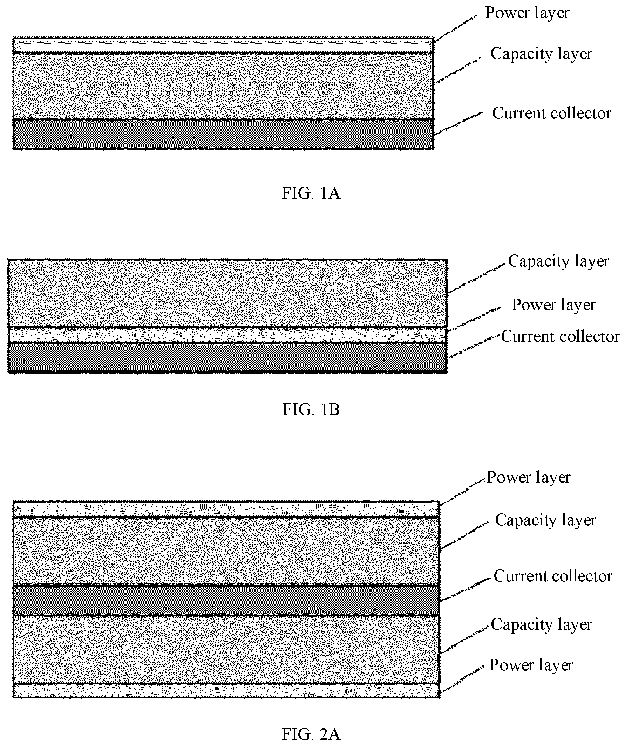

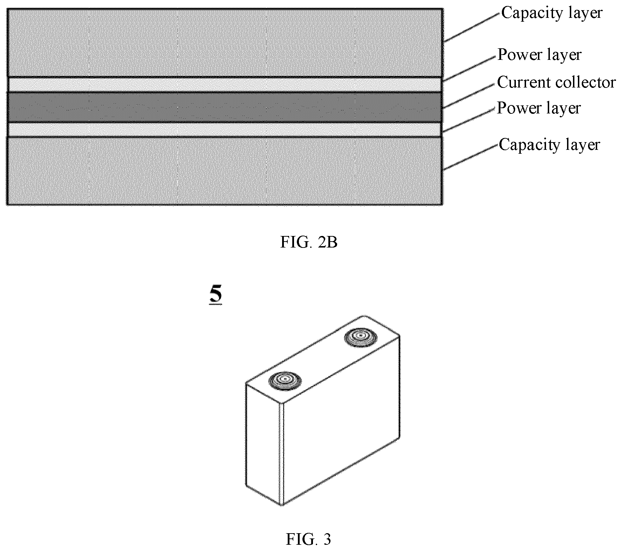

FIG. 1A and FIG. 1B show a positive electrode plate formed according to an embodiment of this application, where a capacity layer and a power layer are formed on a surface of a current collector. In this application, positions of the capacity layer and the power layer can be selected according to the specific use and required performance of lithium-ion batteries. For example, the capacity layer can be located under (inside) the power layer, as shown in FIG. 1A; or the capacity layer can be located on (outside) the power layer, as shown in FIG. 1B. FIG. 2A and FIG. 2B show a positive electrode plate formed according to another embodiment of this application, where a capacity layer and a power layer are respectively formed on two surfaces of a current collector in the middle. It should be noted in particular that dimensions (for example, thickness) of the current collector, the capacity layer, and the power layer in the embodiments shown in FIG. 1A, FIG. 1B, FIG. 2A, and FIG. 2B are not drawn to scale, but only for clearly showing a structure of the positive electrode plate. According to an embodiment of this application, in the cases shown in FIG. 1A and FIG. 2A, the power layer covers the entire outer surface of the capacity layer (a surface of the capacity layer facing away from the current collector). According to another embodiment of this application, in the cases shown in FIG. 1B and FIG. 2B, the capacity layer covers the entire outer surface of the power layer (a surface of the power layer facing away from the current collector). According to a preferred embodiment of this application, the capacity layer is located under (inside) the power layer.

According to an embodiment of this application, the capacity layer and the power layer are in direct contact with each other, without any other layer therebetween. According to another embodiment of this application, one or more additional intermediate layers are optionally disposed between the capacity layer and the power layer. For example, the intermediate layer may be a conductive primer layer (which may be composed of a binder and a conductive agent, for example, the binder and conductive agent listed in the foregoing description of the capacity layer), or may contain any other auxiliary agents known in the art, or may optionally contain same or different positive electrode active materials.

The positive electrode plate described in the foregoing embodiments of this application can be used in lithium-ion batteries. In an embodiment of this application, the lithium-ion battery includes a positive electrode plate, a negative electrode plate, a separator, an electrolyte, and the like. During battery charging and discharging, active ions are intercalated and deintercalated between the positive electrode plate and the negative electrode plate. The electrolyte migrates ions between the positive electrode plate and the negative electrode plate.

The lithium-ion battery of this application includes the negative electrode plate, where the negative electrode plate includes a negative electrode current collector and a negative electrode film layer provided on at least one surface of the negative electrode current collector, and the negative electrode film layer includes a negative electrode active material, a binder, a conductive agent, and another optional additive. In an embodiment of this application, examples of the negative electrode active material include one or more of the following: natural graphite, artificial graphite, soft carbon, hard carbon, silicon-based material, tin-based material, and lithium titanate. The silicon-based material may be selected from one or more of elemental silicon, silicon oxide, and a silicon-carbon composite. The tin-based material may be selected from one or more of elemental tin, tin-oxygen compounds, and tin alloys. In an example, the conductive agent may include one or more of superconducting carbon, carbon black (for example, acetylene black and Ketjen black), carbon dots, carbon nanotubes, graphene, and carbon nanofibers. The binder may include styrene-butadiene rubber (SBR), water soluble unsaturated resin SR-1B, polyacrylic acid (PAA), polymethylacrylic acid (PMAA), polyacrylic acid sodium (PAAS), polyacrylamide (PAM), polyvinyl alcohol (PVA), sodium alginate (SA), and carboxymethyl chitosan (CMCS). Other optional additives are, for example, thickeners (for example, carboxymethyl cellulose CMC and sodium carboxymethyl cellulose CMC-Na), PTC thermistor materials, and the like.

According to an embodiment of this application, the negative electrode plate can be prepared by dispersing the negative electrode active material, binder, conductive agent, other optional additives, and the like in a solvent, and stirring to form a uniform slurry with a specified solid percentage, where the solvent may be N-methylpyrrolidone (NMP) or deionized water, and based on a total weight of the prepared slurry, the solid percentage of the slurry may be 30-80 wt%, for example, 50-70 wt%, or 55-65 wt%; and applying the slurry on the negative electrode current collector, followed by drying and optionally cold pressing, to form the negative electrode plate, where the negative electrode current collector may be a metal foil or a composite current collector, for example, the metal foil may be a copper foil, a silver foil, an iron foil, or a foil made of alloys of the foregoing metal. The composite current collector may include a polymer matrix and a metal layer formed on at least one surface of the polymer matrix, and may be formed by forming a metal material (such as copper, copper alloy, nickel, nickel alloy, titanium, titanium alloy, silver, and silver alloy) on the polymer matrix (for example, a matrix of polypropylene PP, polyethylene glycol terephthalate PET, polybutylene terephthalate PBT, polystyrene PS, polyethylene PE, and copolymers thereof).

In addition, in the battery of this application, the negative electrode plate does not exclude additional functional layers other than the negative electrode active material layer. For example, in some embodiments, the negative electrode plate according to this application may further include a conductive primer layer (for example, consisting of the conductive agent and binder described above that can be used for the negative electrode active material layer) sandwiched between the negative electrode current collector and the negative electrode active material layer and disposed on the surface of the negative electrode current collector. In some other embodiments, the negative electrode plate according to this application may further include a protective layer covering the surface of the negative electrode active material layer.

The electrolyte migrates ions between the positive electrode plate and the negative electrode plate. The electrolyte may be selected from at least one of a solid electrolyte and a liquid electrolyte (or electrolyte solution). In some embodiments, the electrolyte is a liquid electrolyte. The electrolyte includes an electrolytic salt and a solvent. In some embodiments, the electrolytic salt may be selected from one or more of $LiPF_6$ (lithium hexafluorophosphate), $LiBF_4$ (lithium tetrafluoroborate), $LiClO_4$ (lithium perchlorate), $LiAsF_6$ (lithium hexafluoroborate), LiFSI (lithium bis(fluorosulfonyl)imide), LiTFSI (lithium bis-trifluoromethanesulfonimide), LiTFS (lithium trifluoromethanesulfonat), LiDFOB (lithium difluorooxalatoborate), LiBOB (lithium bisoxalatoborate), $LiPO_2F_2$ (lithium difluorophosphate), LiDFOP (lithium difluorophosphate), and LiTFOP (lithium tetrafluoro oxalate phosphate). In an embodiment of this application, the solvent may be selected from one or more of the following: ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), tetramethylene sulfone (SF), methyl sulfone (MSM), ethyl methyl sulfone (EMS), and diethyl sulfone (ESE), and preferably a mixture of two or more of the foregoing solvents, for example, a mixture of ethylene carbonate (EC) and diethyl carbonate (DEC), and more preferably a mixture of ethylene carbonate (EC) and diethyl carbonate (DEC) at a volume ratio of 1:1. In an embodiment of this application, based on the total weight of the electrolyte, a percentage of the solvent is 60-99 wt%, for example, 65-95 wt%, 70-90 wt%, 75-89 wt%, or 80-85 wt%, or within a value range defined by any one of the upper limits and any one of the lower limits. In an embodiment of this application, based on the total weight of the liquid electrolyte, a percentage of the electrolyte is 1-40 wt%, for example, 5-35 wt%, 10-30 wt%, 11-25 wt%, or 15-20 wt%, or within a value range defined by any one of the upper limits and any one of the lower limits.

In an embodiment of this application, the electrolyte may further optionally include an additive. For example, the additive may include one or more of the following: a negative electrode film forming additive and a positive electrode film forming additive, or may include an additive capable of improving some performance of batteries, for example, an additive for improving over-charge performance of batteries, an additive for improving high-temperature performance of batteries, or an additive for improving low-temperature performance of batteries.

In an embodiment of this application, the battery further includes a separator, where the separator separates a positive electrode side of the battery from a negative electrode side, and provides selective transmission or barrier for substances of different types, sizes and charges in the system. For example, the separator is an electronic insulator, which physically separates the positive electrode active material of the battery from the negative electrode active material of the battery, preventing internal short circuit and forming an electric field in a given direction, and which allows ions in the battery to migrate between the positive and negative electrodes through the separator. In an embodiment of this application, a material for preparing the separator may include one or more of glass fiber, non-woven fabric, polyethylene, polypropylene, and polyvinylidene fluoride, and may be a porous film or a non-porous film, and preferably a polyethylene-polypropylene porous film. The separator may be a single-layer film or a multilayer composite film. When the separator is a multilayer composite thin film, each layer may be made of the same or different materials.

In an embodiment of this application, the above positive electrode plate, negative electrode plate, and separator may be made into an electrode assembly/a bare cell through winding or lamination.

In an embodiment of this application, the lithium-ion battery may include an outer package, or a housing. The outer package may be used for packaging the electrode assembly and the electrolyte. In some embodiments, the outer package of the battery may be a hard shell, for example, a hard plastic shell, an aluminum shell, or a steel shell. In some other examples, the outer package of the battery may alternatively be a soft pack, for example, a soft pouch. A material of the soft pack may be plastic, for example, one or more of polypropylene (PP), polybutylene terephthalate (PBT), polybutylene succinate (PBS), and the like.

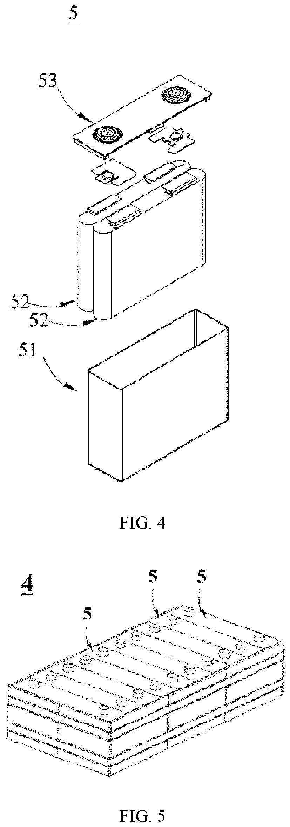

The battery according to this application may be cylindrical, rectangular, or of any other shapes. FIG. 3 shows a rectangular battery 5 as an example. FIG. 4 is an exploded view of the battery 5 in FIG. 3. The outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. A positive electrode plate, a negative electrode plate, and a separator may be made into an electrode assembly 52 through winding or lamination. The electrode assembly is packaged in the accommodating cavity, and the electrolyte infiltrates the electrode assembly 52. The battery 5 may include one or more electrode assemblies 52.

According to an embodiment of this application, after the battery is assembled and the electrolyte is injected into the battery, the battery is subjected to conventional formation, so that a solid electrolyte interface layer (SEI film) is formed on a surface of the negative electrode, thereby obtaining a battery meeting product requirements.

In an embodiment of this application, a plurality of batteries may be assembled into a battery module, the battery module includes two or more batteries, and a quantity of batteries included in the battery module depends on application of the battery module land parameters of a single battery module.

FIG. 5 shows a battery module 4 as an example. Referring to FIG. 5, in the battery module 4, a plurality of batteries 5 may be sequentially arranged in a length direction of the battery module 4. Certainly, the batteries may alternatively be arranged in any other manners. Further, the plurality of batteries 5 may be fastened through fasteners. Optionally, the battery module 4 may further include a housing having an accommodating space, and the plurality of batteries 5 are accommodated in the accommodating space.

In an embodiment of this application, two or more battery modules may be assembled into a battery pack, and a quantity of battery modules included in the battery pack depends on application of the battery pack and parameters of a single battery module. The battery pack may include a battery box and a plurality of battery modules disposed in the battery box, where the battery box includes an upper box body and a lower box body, the upper box body can cover and fits well with the lower box body to form an enclosed space for accommodating the battery modules. The two or more battery modules may be arranged in the battery box in a required manner.

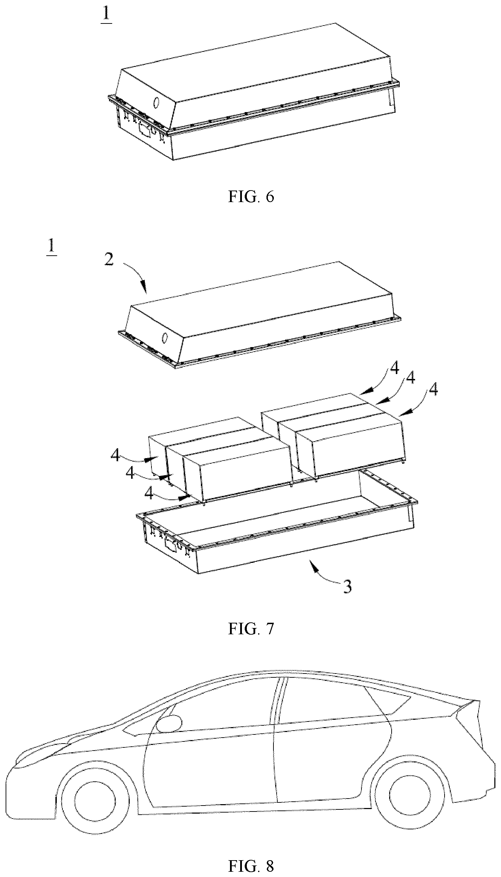

FIG. 6 and FIG. 7 show a battery pack 1 as an example. Referring to FIG. 6 and FIG. 7, the battery pack 1 may include a battery box and a plurality of battery modules 4 arranged in the battery box. The battery box includes the upper box body 2 and the lower box body 3. The upper box body 2 is configured to cover the lower box body 3 to form the enclosed space for accommodating the battery modules 4. The plurality of battery modules 4 may be arranged in the battery box in any manner.

Electric apparatus

In an embodiment of this application, the electric apparatus according to this application includes at least one of the battery, the battery module, or the battery pack according to this application. The battery, the battery module, or the battery pack may be used as a power source for the electric apparatus or an energy storage unit of the electric apparatus. The electric apparatus includes, but is not limited to, a mobile digital device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

FIG. 8 shows an apparatus as an example. The apparatus is a battery electric vehicle, a hybrid electric vehicle, a plug-in hybrid electric vehicle, or the like. To meet a requirement of the apparatus for high power and high energy density, a battery pack or a battery module may be used.

In another example, the apparatus may be a mobile phone, a tablet computer, a laptop computer, or the like. The apparatus usually needs to be light and thin, and a battery may be used as a power source.

How the positive electrode plate prepared according to the embodiments of this application influences performance of electric apparatuses is characterized hereinafter based on specific examples. However, it should be noted in particular that the scope of protection of this application is defined by the claims without being limited to the above embodiments.

Examples

Various raw materials described in Table 1 below are used in the examples. Unless otherwise specified, the raw materials used in the examples of this application are all commercially available products.

| Raw material | Parameter description |
|---|---|
| Lithium iron phosphate | Lithium iron phosphate has a particle size D50 of 0.4 $\mu$m (for power layer) or 1.2 $\mu$m (for capacity layer), and is purchased from Shanghai Maclean Biochemical Technology Co., Ltd. |
| $Li_5FeO_4$ and $Li_2Cu_{0.5}Ni_{0.5}O_2$ | According to literatures, $Li_5FeO_4$ and $Li_2Cu_{0.5}Ni_{0.5}O_2$ are made through a conventional solid-phase mixing and sintering process. D50 of $Li_5FeO_4$ is 5 $\mu$m and D50 of $Li_2Cu_{0.5}Ni_{0.5}O_2$ is 5 $\mu$m. |
| Acetylene black | A conductive agent, purchased from Shanghai Maclean Biochemical Technology Co., Ltd. |
| PVDF | A binder polyvinylidene fluoride, purchased from Shanghai Maclean Biochemical Technology Co., Ltd. |
| CMC | A thickener carboxymethyl cellulose, purchased from Shanghai Maclean Biochemical Technology Co., Ltd. |
| NMP | A solvent N-methylpyrrolidone, analytically pure |
| Separator | A polyethylene/propylene porous polymer film, with a thickness of 12 $\mu$m, is purchased from Celgard. |

The particle sizes recorded in this application are measured using a laser scattering particle size analyzer.

In the following Examples 1-1 to 1-6 and Comparative Examples 1-1 to 1-4, $Li_5FeO_4$ is used as a pre-lithiation agent to prepare lithium-ion batteries and characterize performance thereof.

Example 1-1

In Example 1-1, the lithium-ion battery was obtained by the following steps.

Step 1: Preparation of capacity layer

In this step, the first positive electrode active material lithium iron phosphate (with a D50 of 1.2 $\mu$m), the conductive agent acetylene black, and the binder polyvinylidene fluoride were weighed according to a solid weight ratio of 97:1:2, and these raw materials were mixed in N-methylpyrrolidone to form an uniform slurry with a solid percentage of 62 wt%. In a coating cavity, the slurry was applied on a 60 $\mu$m thick aluminum foil current collector, followed by drying and cold pressing, to form a capacity layer. The capacity layer has a coating weight of 15.6 g/cm$^2$ and a compacted density of 2.5 g/cm$^3$.

Step 2: Preparation of power layer

In this step, the second positive electrode active material lithium iron phosphate (with a D50 of 0.4 $\mu$m), the pre-lithiation agent $Li_5FeO_4$ (with a D50 of 5 $\mu$m), the conductive agent acetylene black, and the binder polyvinylidene fluoride were weighed according to a solid weight ratio of 94.5:2.5:1:2, and these raw materials were mixed in N-methylpyrrolidone to form an uniform slurry with a solid percentage of 60 wt%. In a coating cavity, the slurry was applied on the capacity layer prepared in Step 1, followed by drying and cold pressing, to form a power layer. The power layer has a coating weight of 4 g/cm$^2$ and a compacted density of 2.3 g/cm$^3$. Thus, the positive electrode plate including the current collector, the capacity layer, and the power layer was prepared. A weight ratio of lithium iron phosphate contained in the power layer and lithium iron phosphate contained in the capacity layer is 2:8.

Step 3: Preparation of negative electrode plate

In this step, the negative electrode active material artificial graphite, the conductive agent acetylene black, and the binder styrene-butadiene rubber, and the thickener sodium carboxymethyl cellulose were weighed according to a solid weight ratio of 96.5:0.7:1.8:1, and these raw materials were mixed in deionized water to form an uniform slurry with a solid percentage of 56 wt%. In a coating cavity, the slurry was applied on a 60 $\mu$m thick copper foil current collector, followed by drying and cold pressing, to form a negative electrode plate. A coating weight of the coating layer on the current collector is 10.1 g/cm$^2$.

Step 4: Preparation of battery

In this step, the positive electrode plate, the separator, and the negative electrode plate were stacked in sequence, to form a laminated structure. The laminated structure was placed in an aluminum battery housing, the electrolyte was injected into the aluminum battery housing, and the housing was packaged. The electrolyte was a lithium hexafluorophosphate electrolyte solution with a concentration of 1.1 M in an EC:DEC=1:1(V:V) solvent mixture. The lithium-ion battery in Example 1 was prepared. In this example and each of the following examples and comparative examples, five batteries were made in parallel for a parallel test of high-temperature storage performance.

Example 1-2

In Example 1-2, the lithium-ion battery was obtained through the same steps in Example 1-1, except that in the step of preparing the power layer of the positive electrode plate, the solid weight ratio of the second positive electrode active material lithium iron phosphate, the pre-lithiation agent $Li_5FeO_4$, the conductive agent acetylene black, and the binder polyvinylidene fluoride was 96:1:1:2. In addition, the coating weight of the capacity layer was changed correspondingly, so that the weight ratio of lithium iron phosphate contained in the power layer and lithium iron phosphate contained in the capacity layer was kept at 2:8.

Example 1-3

In Example 1-3, the lithium-ion battery was obtained through the same steps in Example 1-1, except that in the step of preparing the power layer of the positive electrode plate, the solid weight ratio of the second positive electrode active material lithium iron phosphate, the pre-lithiation agent $Li_5FeO_4$, the conductive agent acetylene black, and the binder polyvinylidene fluoride was 87:10:1:2. In addition, the coating weight of the capacity layer was changed correspondingly, so that the weight ratio of lithium iron phosphate contained in the power layer and lithium iron phosphate contained in the capacity layer was kept at 2:8.

Example 1-4

In Example 1-4, the lithium-ion battery was obtained through the same steps in Example 1-1, except that in the step of preparing the power layer of the positive electrode plate, the solid weight ratio of the second positive electrode active material lithium iron phosphate, the pre-lithiation agent $Li_5FeO_4$, the conductive agent acetylene black, and the binder polyvinylidene fluoride was 77:20:1:2. In addition, the coating weight of the capacity layer was changed correspondingly, so that the weight ratio of lithium iron phosphate contained in the power layer and lithium iron phosphate contained in the capacity layer was kept at 2:8.

Example 1-5

In Example 1-5, the lithium-ion battery was obtained through the same steps in Example 1-1, except that the coating weights of the power layer and the capacity layer were adjusted to make the weight ratio of lithium iron phosphate contained in the power layer and lithium iron phosphate contained in the capacity layer be 5:5 while keeping the total coating weight of the power layer and the capacity layer unchanged.

Example 1-6

In Example 1-6, the lithium-ion battery was obtained through the same steps in Example 1-1, except that the coating weights of the power layer and the capacity layer were adjusted to make the weight ratio of lithium iron phosphate contained in the power layer and lithium iron phosphate contained in the capacity layer be 8:2 while keeping the total coating weight of the power layer and the capacity layer unchanged.

Comparative Example 1-1

In Comparative Example 1-1, the lithium-ion battery was obtained through the same steps in Example 1-1, except that in the positive electrode plate, only the capacity layer, but no power layer, was formed on the current collector, and the coating weight of the capacity layer in Comparative Example 1-1 was equal to the sum of the coating weights of the capacity layer and the power layer in Example 1-1.

Comparative Example 1-2

In Comparative Example 1-2, the lithium-ion battery was obtained through the same steps in Comparative Example 1-1, except that lithium iron phosphate with a D50 of 1.2 $\mu$m in Comparative Example 1-1 was all replaced by the same weight of lithium iron phosphate with a D50 of 0.4 $\mu$m.

Comparative Example 1-3

In Comparative Example 1-3, the lithium-ion battery was obtained through the same steps in Example 1-1, except that during preparation of the power layer, solid raw materials used were the second positive electrode active material lithium iron phosphate (with a D50 of 0.4 $\mu$m), the conductive agent acetylene black, and the binder polyvinylidene fluoride at a solid weight ratio of 97:1:2, without the pre-lithiation agent.

Comparative Example 1-4

In Comparative Example 1-4, the lithium-ion battery was obtained through the same steps in Example 1-1, except that during preparation of the power layer, lithium iron phosphate with a D50 of 1.2 $\mu$m was used as the second positive electrode active material. In other words, in Comparative Example 1-4, same lithium iron phosphate with a D50 of 1.2 $\mu$m was used in the capacity layer and the power layer.

**Performance characterization of battery**

The following techniques were used to test the performance of the batteries prepared in Examples 1-1 to 1-6 and Comparative Examples 1-1 to 1-4.

Specific charge/discharge capacity:

At room temperature (25°C), the battery was charged to an end-of-charge voltage at a constant current of 0.33C, and charged to 0.05C at a constant voltage. Measurement was performed to obtain a charging capacity Ec0, and a specific charge capacity was obtained by dividing Ec0 by a mass of the positive electrode active material of the battery. In other words, specific charge capacity (mAh/g) = first-cycle charge capacity/mass of positive electrode active material.

The foregoing charged battery was taken and discharged to an end-of-discharge voltage at a constant current of 0.33C, and measurement was performed to obtain a discharge capacity Ed0. The specific discharge capacity was obtained by dividing Ed0 by the mass of the positive electrode active material of the battery. In other words, specific discharge capacity (mAh/g) = first-cycle discharge capacity/mass of positive electrode active material.

The specific charge capacity test and the specific discharge capacity test were repeated five times each; and the average values of test results were the specific charge capacity and the specific discharge capacity in Table 1.

Calculation of volumetric energy density of battery

Parameters of internal dimensions of the battery, length a, width b, and height c, were measured. Each battery was charged at room temperature to a voltage of 3.65 V at 1C, and then discharged to a voltage of 2.5 V at 1C, and the discharge energy measured at that time was S0.

$$\text{Volumetric energy density of battery} = S0/(a \times b \times c)$$

High-temperature storage performance test of battery

For each example, five batteries were tested in parallel. Each battery was charged at room temperature to a voltage of 3.65 V at 1C, and then discharged to a voltage of 2.5 V at 1C, and a reversible capacity measured at that time was E0. The battery in a fully charged state was placed in an oven at 60°C for 100 days. After being taken out, the battery was immediately tested for its reversible capacity recorded as En. The capacity retention rate $\varepsilon$ of the battery stored at 60°C for 100 days was calculated according to the following formula, and results were summarized in Table 1 below.

$$\varepsilon = (En - E0)/E0 \times 100\%$$

Direct-current resistance test

The secondary battery under test was charged at room temperature to a voltage of 3.65 V at 1C, and then discharged to a voltage of 2.5 V at 1C, and the reversible capacity measured at that time was E0.
The secondary battery under test was charged at room temperature to a voltage of 3.65 V at 0.33C, discharged for 90 min at 0.33C, and then discharged for 30s at 4C. The resistance at the 30-th second was calculated according to the following formula.

$$DCR = (U_{initial} - U_{end})/I$$

Table 1: Characterization results of specific charge/discharge capacity, energy density, and capacity retention rate after high-temperature storage for 100 days of the batteries in Examples 1-1 to 1-6 and Comparative Examples 1-1 to 1-4 of this application

|  | Specific charge capacity (mAh/g) | Specific discharge capacity (mAh/g) | Volumetric energy density of battery (WHAL) | Capacity retention rate after storage at 60°C for 100 days (%) |
|---|---|---|---|---|
| Example 1-1 | 167 | 145 | 383 | 96.8% |
| Example 1-2 | 160 | 147 | 388 | 93.6% |
| Example 1-3 | 196 | 134 | 353 | 97.9% |
| Example 1-4 | 224 | 120 | 316 | 98.5% |
| Example 1-5 | 169 | 146 | 385 | 95.7% |
| Example 1-6 | 171 | 147 | 388 | 94.8% |
| Comparative Example 1-1 | 159 | 143 | 360 | 90.8% |
| Comparative Example 1-2 | 156 | 140 | 376 | 91.8% |
| Comparative Example 1-3 | 157 | 141 | 373 | 91.5% |
| Comparative Example 1-4 | 164 | 144 | 385 | 93.1% |

It can be learned from the characterization results in Table 1 that, as compared with the comparative examples, all examples of this application show better capacity retention rate after the batteries are stored at 60°C for 100 days, and achieve good specific charge/discharge capacity and energy density, well meeting the market requirements for lithium-ion batteries in such aspects.

Table 2: Characterization results of direct-current resistance of batteries at the 30-th second in Examples 1-1 to 1-6 and Comparative Example 1-4 of this application

| | Example 1-1 | Example 1-2 | Example 1-3 | Example 1-4 | Example 1-5 | Example 1-6 | Comparative Example 1-4 |
|---|---|---|---|---|---|---|---|
| Direct-current resistance DCR after discharged at 4C for 30 seconds (mΩ) | 23.11 | 22.82 | 23.74 | 23.99 | 22.42 | 21.67 | 24.68 |

It can be learned from the characterization results in Table 2 that, as compared with the comparative examples, resistance of the batteries prepared in the examples of this application has a much lower resistance at the 30-th second. This indicates that in this application, the particle sizes of the anode active materials in the capacity layer and power layer being specially designed can effectively inhibit an increase in battery resistance caused by delithiation commonly existing in the prior art, thereby significantly improving the performance of the batteries.

Example 2-1 to Example 2-6

In Examples 2-1 to 2-6, the lithium-ion batteries were obtained by using same steps in Examples 1-1 to 1-6 respectively, except that during preparation of the power layer, the same weight of $Li_2Ni_{0.5}Cu_{0.5}O_2$, instead of $Li_5FeO_4$, was used as the pre-lithiation agent.

Comparative Example 2-1

In Comparative Example 2-1, the lithium-ion battery was obtained through the same steps in Comparative Example 1-4, except that during preparation of the power layer, the same weight of $Li_2Ni_{0.5}Cu_{0.5}O_2$, instead of $Li_5FeO_4$, was used as the pre-lithiation agent.

The specific charge capacity, specific discharge capacity, volumetric energy density, capacity retention ratio, and direct-current resistance of the lithium-ion batteries prepared in Examples 2-1 to 2-6 and Comparative Example 2-1 were characterized according to the foregoing steps, and summarized in Table 2. To compare the performance of the batteries more intuitively, the characterization results of the foregoing comparative examples 1-1 to 1-3 in which no pre-lithiation agent is used are also listed in Table 3.

Table 3: Characterization results of specific charge/discharge capacity, energy density, and capacity retention rate after high-temperature storage for 100 days of the batteries in Examples 2-1 to 2-6, Comparative Examples 1-1 to 1-3, and Comparative Example 2-1 of this application

| | Specific charge capacity (mAh/g) | Specific discharge capacity (mAh/g) | Volumetric energy density of battery (Wh/L) | Capacity retention rate after storage at 60°C for 100 days (%) |
|---|---|---|---|---|
| Example 2-1 | 166 | 143 | 378 | 95.9% |
| Example 2-2 | 160 | 146 | 386 | 92.9% |
| Example 2-3 | 180 | 139 | 367 | 97.2% |
| Example 2-4 | 192 | 130 | 343 | 98.0% |

(continued)

| | Specific charge capacity (mAh/g) | Specific discharge capacity (mAh/g) | Volumetric energy density of battery (Wh/L) | Capacity retention rate after storage at 60°C for 100 days (%) |
|---|---|---|---|---|
| Example 2-5 | 168 | 144 | 380 | 94.3% |
| Example 2-6 | 169 | 145 | 383 | 93.6% |
| Comparative Example 1-1 | 159 | 143 | 360 | 90.8% |
| Comparative Example 1-2 | 156 | 140 | 376 | 91.8% |
| Comparative Example 1-3 | 157 | 141 | 373 | 91.5% |
| Comparative Example 2-1 | 163 | 142 | 381 | 92.4% |

It can be learned from the characterization results in Table 3 that, as compared with the comparative examples, after the pre-lithiation agent is replaced, all examples of this application also show significantly better capacity retention rate than the comparative examples, and also have good specific charge/discharge capacity and energy density, well meeting market requirements for lithium-ion batteries in such aspects.

Table 4: Characterization results of direct-current resistance of batteries at the 30-th second in Examples 2-1 to 2-6 and Comparative Example 2-1 of this application

| | Example 2-1 | Example 2-2 | Example 2-3 | Example 2-4 | Example 2-5 | Example 2-6 | Comparative Example 2-1 |
|---|---|---|---|---|---|---|---|
| Direct-current resistance DCR after discharged at 4C for 30 seconds (mΩ) | 23.24 | 22.95 | 23.84 | 24.17 | 23.04 | 22.36 | 25.2 |

It can be learned from the characterization results in Table 4 that, as compared with the comparative examples, after the pre-lithiation agent is replaced, the batteries prepared in the examples of this application also achieve a much lower direct-current resistance at the 30-th second. This indicates that the particle sizes of the anode active materials in the capacity layer and power layer being specially designed can effectively inhibit an increase in battery resistance caused by delithiation commonly existing in the prior art, thereby significantly improving the performance of the batteries.

**Claims**

1. A positive electrode plate for lithium-ion battery, wherein the positive electrode plate comprises:

   i) a current collector;
   ii) at least one capacity layer, wherein the capacity layer comprises a first binder, a first conductive agent, and a first positive electrode active material, the first positive electrode active material having a first median particle size; and

ii) at least one power layer, wherein the power layer comprises a second binder, a second conductive agent, a pre-lithiation agent, and a second positive electrode active material, the second positive electrode active material having a second median particle size; wherein

the first median particle size is greater than the second median particle size.

2. The positive electrode plate according to claim 1, **characterized in that**

the positive electrode plate comprises at least one capacity layer located on at least one surface of the current collector, and at least one power layer located on a surface of the at least one power layer facing away from the current collector; or

the positive electrode plate comprises a power layer located on at least one surface of the current collector and at least one capacity layer located on a surface of the at least one power layer facing away from the current collector.

3. The positive electrode plate for lithium-ion battery according to claim 1, **characterized in that** the first median particle size of the first positive electrode active material is 0.8-1.3 $\mu$m; and the second median particle size of the second positive electrode active material is 0.1-0.7 $\mu$m, and preferably 0.2-0.45 $\mu$m.

4. The positive electrode plate for lithium-ion battery according to claim 1, **characterized in that**

the first positive electrode active material and the second positive electrode active material are each independently selected from lithium cobaltate, lithium iron phosphate, lithium manganese iron phosphate, lithium vanadium phosphate, lithium vanadyl phosphate, lithium vanadate, lithium manganate, positive electrode active material shown in formula I, positive electrode active material shown in formula II, and a combination thereof:

$$LiNi_xCo_yA_zO_2 \qquad \text{formula I}$$

in formula I, A is selected from one or more of the following elements: manganese, aluminum, copper, zinc, tin, titanium, magnesium, and iron, $0.01 \leq x \leq 0.98$, $0.01 \leq y \leq 0.98$, $0.01 \leq z \leq 0.98$, and $x+y+z=1$;

$$LiFe_{1-m-n}Mn_mB_nPO_4 \qquad \text{formula II}$$

in formula II, $0 \leq m \leq 1$, $0 \leq n \leq 0.1$, and B is selected from at least one of transition metal elements other than Fe and Mn and non-transition metal elements.

5. The positive electrode plate for lithium-ion battery according to claim 4, **characterized in that** the first positive electrode active material and the second positive electrode active material are both lithium iron phosphate.

6. The positive electrode plate for lithium-ion battery according to claim 1, **characterized in that** the pre-lithiation agent is selected from one or more of the following: $Li_2M1O_2$, $Li_2M2O_3$, $Li_2M3O_4$, $Li_3M4O_4$, $Li_5M5O_4$, $Li_5M6O_6$, $Li_6M7O_4$, and $Li_aC_bO_c$;

wherein M1 is selected from one or more of the following: Cu, Ni, Mn, Fe, Cr, Mo, Zn, Sn, Mg, and Ca;
wherein M2 is selected from one or more of the following: Ni, Co, Fe, Mn, Sn, Cr, Mo, Zr, Si, Cu, and Ru;
wherein M3 is selected from one or more of the following: Ni, Co, Fe, Mn, Sn, Cr, V, and Nb;
wherein M4 is selected from one or more of the following: Cu, Ni, Mn, Fe, Cr, Mo, Zn, Sn, Mg, and Ca;
wherein M5 is selected from one or more of the following: Ni, Co, Fe, Mn, Sn, Cr, Mo, and Al;
wherein M6 is selected from one or more of the following: Cu, Ni, Mn, Fe, Cr, Mo, Zn, Sn, Mg, and Ca; and
wherein M7 is selected from one or more of the following: Ni, Co, Mn, Fe, and Ru;
wherein a is an integer 1 or 2, b is an integer 0, 1, 2, 3, or 4, and c is an integer 1, 2, 3, 4, 5, or 6; and
a median particle size of the pre-lithiation agent is 5-15 $\mu$m; and
preferably, the pre-lithiation agent comprises $Li_2Cu_{0.5}Ni_{0.5}O_2$, $Li_5FeO_4$, and a combination thereof.

7. The positive electrode plate for lithium-ion battery according to claim 1, **characterized in that**

based on the total weight of the capacity layer, the capacity layer comprises 1-30 wt% of the first binder, 0.1-10 wt% of the first conductive agent, and 60-98.5 wt% of the first positive electrode active material;

based on the total weight of the power layer, the power layer comprises 1-30 wt% of the second binder, 0.1-10 wt% of the second conductive agent, 0.1-30 wt% of the pre-lithiation agent, and 50-97 wt% of the second positive electrode active material; and

a percentage of the second conductive agent in the power layer is equal to or greater than a percentage of the first conductive agent in the capacity layer.

8. The positive electrode plate for lithium-ion battery according to claim 1, **characterized in that** a weight ratio of the power layer and the capacity layer is 1:9 to 9:1.

9. A lithium-ion battery, comprising a negative electrode plate, an electrolyte, a separator, and the positive electrode plate for lithium-ion battery according to any one of claims 1 to 8.

10. A battery module, comprising the lithium-ion battery according to claim 9.

11. A battery pack, comprising the battery module according to claim 10.

12. An electric apparatus, comprising the lithium-ion battery according to claim 9, the battery module according to claim 10, or the battery pack according to claim 11.

Power layer

Capacity layer

Current collector

FIG. 1A

Capacity layer

Power layer

Current collector

FIG. 1B

Power layer

Capacity layer

Current collector

Capacity layer

Power layer

FIG. 2A

Capacity layer

Power layer

Current collector

Power layer

Capacity layer

FIG. 2B

**5**

FIG. 3

<u>5</u>

53

52
52

51

FIG. 4

<u>4</u>

5    5

5

FIG. 5

<u>1</u>

FIG. 6

<u>1</u>

FIG. 7

FIG. 8

## INTERNATIONAL SEARCH REPORT

| International application No. |
| --- |
| **PCT/CN2022/074723** |

| A. | CLASSIFICATION OF SUBJECT MATTER |
| --- | --- |
| | H01M 4/13(2010.01)i |

According to International Patent Classification (IPC) or to both national classification and IPC

| B. | FIELDS SEARCHED |
| --- | --- |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC: 正极, 阴极, 粒径, 补, 锂, cathode, positive, particle, size, lithium, supplement

| C. | DOCUMENTS CONSIDERED TO BE RELEVANT | |
| --- | --- | --- |
| Category* | Citation of document, with indication, where appropriate, of the relevant passages | Relevant to claim No. |
| X | CN 113346048 A (ZHEJIANG LUNQIN RADIATION PROTECTION ENGINEERING CO., LTD.) 03 September 2021 (2021-09-03)<br>description, paragraphs 3-29 | 1-12 |
| Y | CN 112467107 A (ZHUHAI GUANYU POWER BATTERY CO., LTD.) 09 March 2021 (2021-03-09)<br>description, paragraphs 4-60 | 1-12 |
| Y | CN 113299875 A (NINGDE AMPEREX TECHNOLOGY LTD.) 24 August 2021 (2021-08-24)<br>description, paragraphs 5-16 | 1-12 |
| Y | JP 2017157529 A (SEIKO EPSON CORP.) 07 September 2017 (2017-09-07)<br>description, paragraphs 5-46 | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 October 2022** | **25 October 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/074723**

| Patent document cited in search report | | | Publication date (day/month/year) | Patent family member(s) | Publication date (day/month/year) |
|---|---|---|---|---|---|
| CN | 113346048 | A | 03 September 2021 | None | |
| CN | 112467107 | A | 09 March 2021 | None | |
| CN | 113299875 | A | 24 August 2021 | None | |
| JP | 2017157529 | A | 07 September 2017 | None | |

Form PCT/ISA/210 (patent family annex) (January 2015)